# EUROPEAN PATENT APPLICATION

(11) **EP 1 718 016 A2**
(43) Date of publication of application: **02.11.2006**
(21) Application number: 06008828.3
(22) Date of filing: 27.04.2006
(51) Int. Cl.: H04L 12/64

(54) **Method and apparatus for reducing jitter**

(30) Priority: 29.04.2005 US 594697 P
(71) Applicant: ASUSTeK Computer Inc., Peitou, Taipei City (TW)
(72) Inventor: Jiang, Sam Shiaw-Shiang, c/o ASUSTeK Computer Inc., Taipei City (TW)
(74) Representative: Hager, Thomas Johannes

(57) **Abstract**

A jitter reducing method in a receiver of a selective combining system includes determining a slowest cell corresponding to the receiver in the selective combining system, treating a plurality of missing packets as being received when a data stream transmitted by the slowest cell is detected to comprise the plurality of missing packets and a sequence number of a first packet in the plurality of missing packets is a sequence number of a next packet that is expected to be received in sequence, and delivering a received packet following the plurality of missing packets in sequence to an upper layer.

## Description

### Cross Reference To Related Applications

This application claims the benefit of U.S. Provisional Application No. 60/594,697, filed 04/29/2005, and included herein by reference.

### Background of the Invention

### 1. Field of the Invention

The present invention is a method for reducing data streams jittering in a receiver of a selective combining system, in particular a method of avoiding the receiver temporarily storing packets that have been successfully received and not delivering the packets to an upper layer, hence causing delays in processing data streams.

### 2. Description of the Prior Art

With advances of mobile communications devices in recent years, there are various applications for entertainment and information services. In a 2^{nd} generation (2G) mobile communications system, multimedia services are mostly limited to Short Messaging Services (SMS) with each message containing no more than 160 characters, and only simple ring tones are allowed, which are about 3 to 20 Kbytes, or other small data to be downloaded. Now the 3^{rd} generation mobile network technology has been developed with the rising of processor core performance and multimedia services in mobile communications have catered to a higher data transmission capacity and also a larger variety of types of multimedia services have been developed.

For example, according to a communications protocol specification developed by the 3^{rd} Generation Partnership Project (3GPP), the Universal Mobile Telecommunications System (UMTS) can provide Multimedia Broadcast and Multicast Service (MBMS), which transmits service content (e.g., television programs, movies, commercials) from servers to each user equipment through different cells in Unacknowledged Mode (UM). Each user equipment may be located under coverage of many different cells. In other words, a user equipment can receive a same service content from different cells. Thus, in order to have the user equipment correctly process the service content and take advantage of this multi-route transmission characteristic, a Radio Link Control (RLC) entity of a UMTS receiver (i.e. the user equipment) in the prior art is able to initiate a Selective Combining Function, also called a Duplicate Avoidance and Reordering Function, efficiently combining Protocol Data Units (PDUs) that may be transmitted from different sources (cells) and/or duplicating transmission from a same source to form a single order of a PDU sequence. After initiating the Duplicate Avoidance and Reordering Function, the RLC entity executes duplicate PDU detecting, discarding and reordering operations according to Sequence Numbers (SNs) of the PDUs. For more detailed description of the operations, please refer to following statements.

First, to support the Duplicate Avoidance and Reordering Function, state variables and protocol parameters below are defined by the specification of the communications protocol described above:
1. Variable VR(UDR): represents an SN of a next PDU that is expected to be received in sequence.
2. Variable VR(UDH): represents an SN of a highest numbered PDU that has been received by the Duplicate Avoidance and Reordering Function.
3. Parameter DAR_Window_Size: indicates a size of a receiving window of the Duplicate Avoidance and Reordering Function.

The RLC entity executes the Duplicate Avoidance and Reordering Function according to the variable VR(UDR) and a receiving window of the Duplicate Avoidance and Reordering Function where a receivable range of the receiving window is from (VR(UDH) - DAR_Window_Size + 1) to VR(UDH). After initiating the Duplicate Avoidance and Reordering Function, if an SN of a received PDU lies inside the receiving window and the SN is smaller than the variable VR(UDR), or there is a PDU with the same SN existing in a buffer, then the received PDU is discarded. Conversely, if the SN of the received PDU is larger than or equal to the variable VR(UDR) and there is no PDU with the same SN existing in the buffer, then the received PDU is stored in the buffer. In addition, if the SN of the received PDU lies outside the receiving window, the received PDU is stored in the buffer, the variable VR(UDH) is set to be the SN of the received PDU so as to advance the receiving window, PDUs with SNs smaller than (VR(UDH) - DAR_Window_Size + 1) are discarded from the buffer and delivered to an upper layer for further operations, and the variable VR(UDR) is set to be equal to (VR(UDH) - DAR_Window_Size + 1) when the variable VR(UDR) is smaller than (VR(UDH) - DAR_Window_Size + 1). Furthermore, if there is a PDU with an SN equal to the updated variable VR(UDR) existing in the buffer, the PDU with the SN equal to the variable VR(UDR) in the buffer and all PDUs with consecutive SNs after the SN (i.e. from VR(UDR) + 1) are discarded and delivered to the upper layer for further operations. Finally, the variable VR(UDR) is set to be equal to a highest SN of the PDUs that have been delivered to the upper layer plus 1.

From the above description, as the receiver receives a same PDU from different sources, the Duplicate Avoidance and Reordering Function discards the duplicate PDU. However, cells are not in synchronization, so there is a time difference between cells transmissions even if service contents are identical. For a specific receiver, signals transmitted by some cells arrive 'slower' and signals transmitted by some cells arrive 'faster', meaning that signals of some cells are 'slower' and signals of some cells are 'faster' to the receiver. Thus, when the receiver does not successfully receive some PDUs, the receiver cannot process any successfully received PDUs of a service content that are sequentially later than the missing PDUs but store the successfully received PDUs in a buffer. The receiver waits for a slower neighboring cell to transmit PDUs that are missing. The successfully received PDUs are kept in the buffer and are not delivered to an upper layer until the missing ones are successfully received. Now, suppose the receiver (like a user equipment, wireless communication device) moves into a 'slower' cell. Since the 'slower' cell has a slower timing sequence of PDUs, the successfully received PDUs need to be stored in the buffer longer. This causes delay in replaying the service content. In contrast, if the receiver moves into a 'faster' cell instead, there are PDUs that the receiver cannot get so that a data stream will jump forward. When broadcasting sports games, movies, songs or music, this kind of delaying or jittering situations affect program fluency, deteriorate broadcasting quality and reduce user interest.

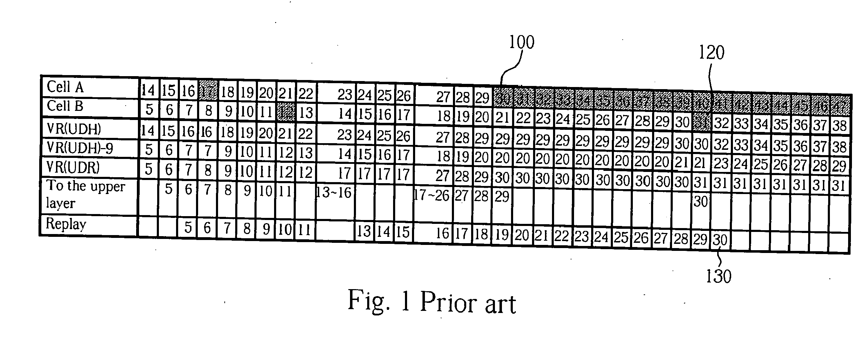

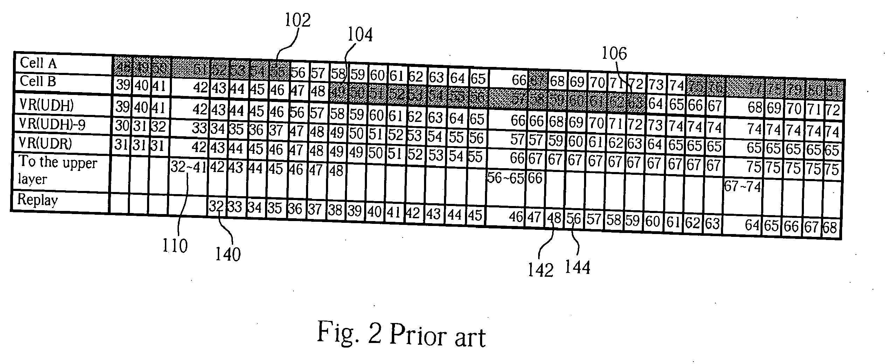

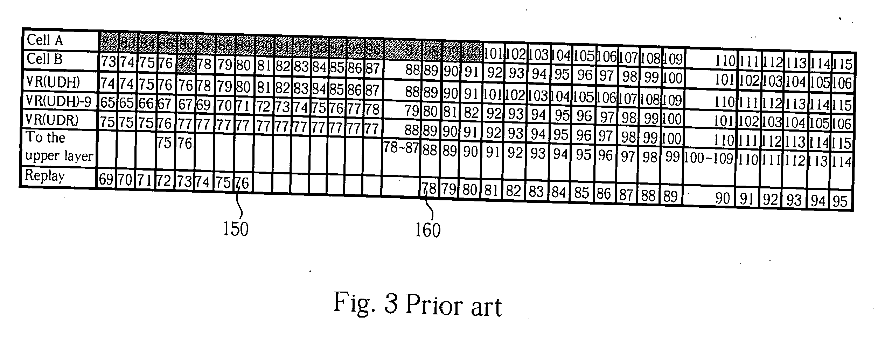

For illustration, please refer to Fig. 1 to Fig. 3. Fig. 1 to Fig. 3 are diagrams representing variables and SNs of received PDUs of a receiver that moves between a faster cell A and a slower cell B. Suppose that packets transmitted by the cell A are ahead of those transmitted by the cell B by 9 Transmission Time Intervals (TTIs), and parameter DAR_Window_Size is 10. In Fig. 1 to Fig. 3, each square represents a TTI, which is set to be 20 milliseconds (ms) in general. The first and second rows represent SNs of PDUs the receiver received from the cell A and the cell B respectively, where shaded squares denote PDUs that are not successfully received. The third and fifth rows represent values of the variable VR(UDH) and the variable VR(UDR) respectively. The fourth row is a value of (VR(UDH) - DAR_Window_Size + 1), which is a start point of the receiving window. The sixth row represents SNs of PDUs that are delivered to the upper layer from the buffer. The seventh row represents SNs of PDUs that the receiver replays at the end. Additionally, contiguous shaded squares mean PDUs cannot be received due to the receiver moving out of coverage of a cell, and a single shaded square represents a SN of a PDU that is missing during radio transmission.

Update timing of each row is illustrated as follows. The variable VR(UDH) of the third row is updated when data of the first and second rows are received. The fourth row is calculated and updated as the third row is updated. The sixth row shows SNs (may be more than 1) to be delivered to the upper layer when the first and second rows received data at a previous TTI (previous column). (In practice, delivering PDUs to upper layer does not take 20 ms. Fig. 1 to Fig. 3 are for illustration purpose only and are not drawn according to a detailed time scale.) The variable VR(UDR) in the fifth row is updated after delivering data of the sixth row to the upper layer. There is a fixed time difference between the replay value of the seventh row and the value of the sixth row. The time difference shown in Fig. 1 to Fig. 3 is one square, which represents 20 ms, but the time difference can be longer or shorter in real practice.

When the system is providing a service of broadcasting a data stream, since a program is a continuous data stream with only one PDU from the data stream being played at a TTI, when a replay software receives a plurality of PDUs at the same time, PDUs that have not been replayed are temporarily stored in a buffer controlled by the replay software and replayed one by one. In the prior art, only when it is assured that a missing PDU cannot be obtained (i.e. after the missing PDU had moved outside the receiving window), the Duplicate Avoidance and Reordering Function is allowed to deliver the following PDU or a plurality of PDUs to the upper layer from the buffer. This procedure leads to discontinuity in program replays.

For example, in Fig. 1 to Fig.3, between a time point 100 and a time point 102, the receiver is out of a coverage of the cell A so that the receiver cannot receive PDUs with SN = 30 to 55 from the cell A. Suppose that the receiver does not receive a PDU with SN = 31 from the cell B at the time point 120, and a receiving window size of the Duplicate Avoidance and Reordering Function is 10. PDUs with SN = 32 to 41 are temporarily stored until a time point 110, when the PDUs with SN = 32 to 41 altogether are delivered to the upper layer. This means that after a PDU with SN = 30 been replayed at a time point 130, 10 TTIs go by before replaying the PDU with SN = 32 at a time point 140. In other words, since the receiver moves out of the coverage of the faster cell A, the receiver can only receive the data stream from the slower cell B. If the receiver cannot receive the PDU with SN = 31 at the time point 120, there is a long interruption in replaying the data stream. Hence an original interval of 1 TTI (20 ms) is delayed to be 10 TTIs (200 ms) and causes discontinuity in program replay and affects program quality. Similarly, after replaying a PDU with SN = 76 at a time point 150, there is a delay of 8 TTIs before replaying a PDU with SN = 78 at a time point 160. In even worse cases, if the receiving window size of the Duplicate Avoidance and Reordering Function is large (for instance, DAR_Window_Size = 64), there can be a data stream delay longer than 1 second that leads to obvious program interruptions, which may get users frustrated.

Furthermore, suppose that the receiver is out of the coverage of the cell B between the time points 104 and 106, so that the receiver cannot receive PDUs with SN = 49 to 63 from the cell B. This means that, the receiver cannot receive PDUs with SN = 49 to 55 from the cell A nor the cell B. Therefore, after the receiver replays a PDU with SN = 48 at a time point 142, the receiver immediately replays a PDU with SN = 56 at a next TTI (i.e. a time point 144), meaning jumping forward 7 TTIs in comparison to an original replay timing. Again, if the receiving window of the Duplicate Avoidance and Reordering Function is large (for instance, DAR_Window_Size = 64), there can be a jump larger than 1 second, leading to obvious program pauses and frustrated users.

In summary, UMTS provides MBMS in UM and the receiver is able to receive the same PDU from different cells. For better data receiving efficiency, the RLC entity of the receiver can initiate the Duplicate Avoidance and Reordering Function, which discards duplicate PDUs. However, since different cells may have time difference for a same packet, packets sent from some cells arrive at the receiver slower than packets sent from other cells. In the prior art, if the receiver moves into a slower cell and if a packet is lost, there is a time delay due to storing the incomplete PDU sequence in the buffer and hence the service content is replayed with an obvious interruption, which affects program fluency and frustrates users. Additionally, if the receiver moves into a faster cell, the receiver cannot receive several PDUs and the received data stream is jumped forward, which causes discontinuity in program content and deteriorate program quality.

### Summary of the Invention

A jitter reducing method in a receiver of a selective combining system, the method includes determining a slowest cell corresponding to the receiver in the selective combining system, treating a plurality of missing packets as being received when a data stream transmitted by the slowest cell is detected to comprise the plurality of missing packets and a sequence number of a first packet in the plurality of missing packets is a sequence number of a next packet that is expected to be received in sequence, and delivering a received packet following the plurality of missing packets in sequence to an upper layer. These and other objectives of the present invention will no doubt become obvious to those of ordinary skill in the art after reading the following detailed description of the preferred embodiment that is illustrated in the various figures and drawings.

### Brief Description of the Drawings

Fig. 1 to Fig. 3 are diagrams representing variables and SNs of received PDUs when a receiver moves between a faster cell and a slower cell in UMTS of the prior art.
Fig. 4 is a block diagram of a mobile communications device.
Fig. 5 is a schematic diagram of the program code in Fig. 4.
Fig. 6 is a flow chart of a procedure of a first embodiment for reducing data stream jittering in a selective combining system in the present invention.
Fig. 7 to Fig. 9 are diagrams representing variables and SNs of received PDUs when a receiver moves between a faster cell and a slower cell according to the procedure in Fig. 6.
Fig. 10 is a flow chart of a procedure of a second embodiment for reducing data stream jittering in a selective combining system in the present invention.
Fig. 11 to Fig. 13 are diagrams representing variables and SNs of received PDUs when a receiver moves between a faster cell and a slower cell according to the procedure in Fig. 10.
Fig. 14 is a flow chart of a procedure of a third embodiment for reducing data stream jittering in a selective combining system in the present invention.

### Detailed Description

The present invention is for a selective combining system, which can combine PDUs transmitted from different sources (cells), through initiating a Duplicate Avoidance and Reordering Function, to form a single ordered PDU sequence. The following descriptions are for use in a mobile communications system, such as UMTS mentioned above.

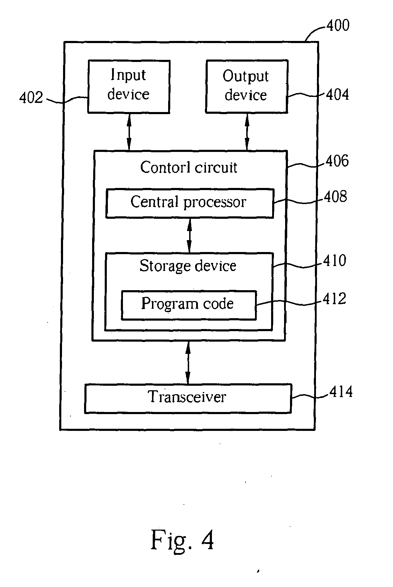

First of all, please refer to Fig. 4. Fig. 4 is a block diagram of a mobile communications device 400. For simplicity, Fig. 4 only shows an input device 402, an output device 404, a control circuit 406, a central processor 408, a storage device 410, a program code 412, and a transceiver 414 of the mobile communications device 400. In the mobile communications device 400, the control circuit 406 executes the program code 412 stored in the storage device 410 with the central processor 408, and then controls operations of the mobile communications device 400. The mobile communications device 400 can receive signals inputted by users through the input device 402, or output signals like images, sounds etc. through the output device 404 (such as monitor, speaker etc.). The transceiver 414 is used for receiving radio signals and delivering received radio signals to the control circuit 406 or transmitting signals submitted from the control circuit 406 in a radio manner. In a structure of a communications protocol, the transceiver 414 is known as a part of Layer one, whereas the control circuit 406 is an application of Layer two and Layer three.

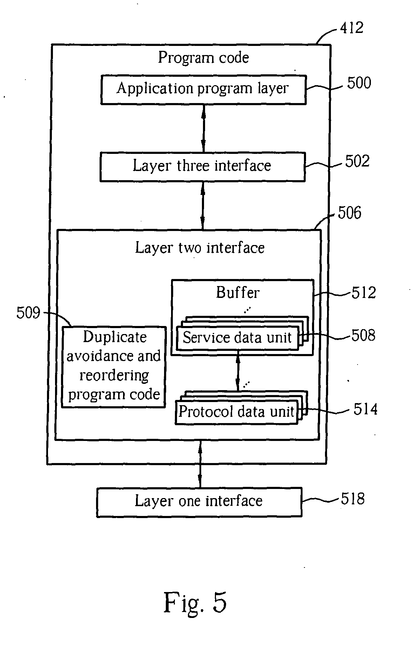

Please refer to Fig. 5. Fig. 5 is a schematic diagram of the program code 412 in Fig. 4. The program code 412 comprises an application program layer 500, a Layer three interface 502, a Layer two interface 506, and a Layer one interface 518. When transmitting signals, the Layer two interface 506 stores a plurality of Service Data Units (SDUs) 508 submitted from the Layer three interface 502 in a buffer 512. Then, the Layer two interface 506 generates a plurality of PDUs 514 according to the SDUs 508 stored in the buffer 512 and outputs the generated PDUs 514 to a destination through the Layer one interface 51 8. In reverse, when receiving a radio signal, the signal is received through the Layer one interface 518 and the Layer one interface 518 delivers PDUs 514 to the Layer two interface 506. The Layer two interface 506 reassembles the PDUs 514 to SDUs 508 and stores the SDUs 508 in the buffer 512. At last, the Layer two interface 506 delivers the SDUs 508 stored in the buffer 512 to the Layer three interface 502.

The 3^{rd} generation mobile communications system UMTS can provide MBMS, which transmits service content (e.g. movies, music, commercials and other multimedia information) from servers to each user equipment through different cells in UM. In order to have the mobile communications device 400 correctly process the service content, the Layer two interface 506 of the program code 412 is able to initiate a Selective Combining Function, also called a Duplicate Avoidance and Reordering Function, which efficiently combines Protocol Data Units (PDUs), which may be transmitted from different sources (cells) and/or repetitively transmitted from a same source, to form a single ordered PDU sequence. In this case, the present invention provides a duplicate avoidance and reordering program code 509 to reduce jittering occurred in data streaming and improves program quality.

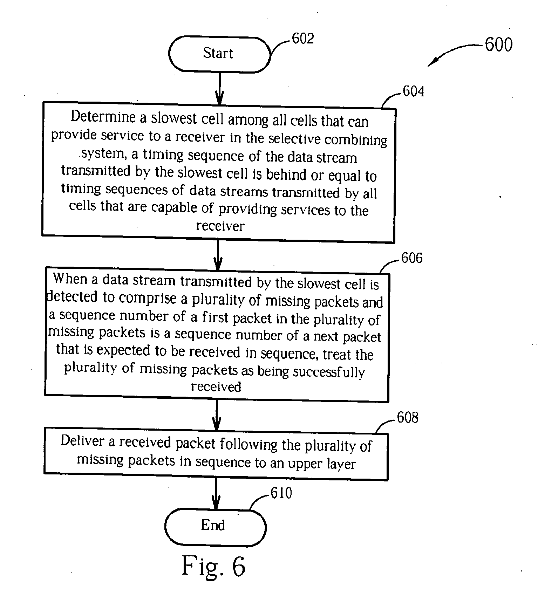

Please refer to Fig. 6. Fig. 6 is a flow chart of a procedure 600 of a first embodiment for reducing data stream jittering in a selective combining system. The selective combining system can be a mobile communications system, such as UMTS, operating in UM. The procedure 600 can be compiled into the duplicate avoidance and reordering program code 509. The procedure 600 comprises following steps.
Step 602: start.
Step 604: determine a slowest cell among all cells that can provide service to a receiver in the selective combining system, a timing sequence of the data stream transmitted by the slowest cell is behind or equal to timing sequences of data streams transmitted by all cells that are capable of providing services to the receiver.
Step 606: when a data stream transmitted by the slowest cell is detected to comprise a plurality of missing packets and a sequence number of a first packet in the plurality of missing packets is a sequence number of a next packet that is expected to be received in sequence, treat the plurality of missing packets as being successfully received.
Step 608: deliver a received packet following the plurality of missing packets in sequence to an upper layer.
Step 610: end.

According to the procedure 600 of the present invention, the receiver determines a slowest cell according to timing sequences of data streams transmitted by all available cells. The slowest cell transmits a data stream with a timing sequence that is behind or equal to timing sequences of data streams from other cells. If the data stream transmitted by the slowest cell comprises at lease one missing packet, and a first missing packet has an SN equal to an SN of a next PDU that is expected to be received (i.e. the variable VR(UDR)), the plurality of missing packets is treated as received. This means that, if the receiver cannot receive a next expected packet from the slowest cell, the present invention considers this missing packet as received, so that the receiver can deliver packets after the missing packet in sequence to an upper layer. This enables other successfully received packets following the missing packet to be delivered to the upper layer and avoids program interruptions as in the prior arts. In real practices, the variable VR(UDR) is incremented by the number of missing packets, so that the receiver determines the missing packets as received. Consequently, the procedure 600 avoids the receiver from holding successfully received packets in the buffer unnecessarily and hence achieves a purpose of reducing data stream jittering.

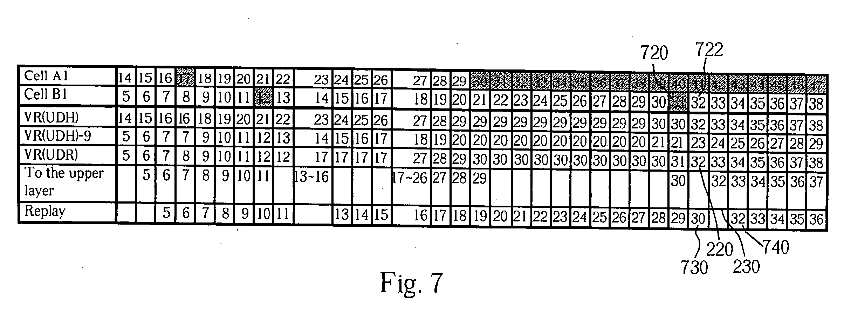

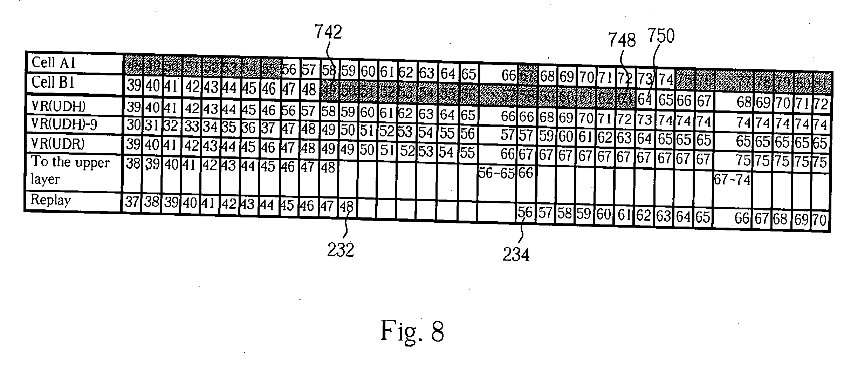

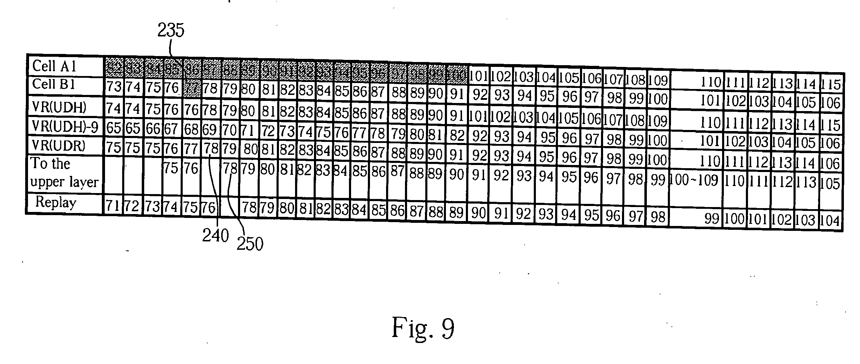

For example, please refer to Fig. 7 to Fig. 9. As displayed in Fig. 7 to Fig. 9, a first row and a second row (i.e. SNs of PDUs received by the receiver from a cell A1 and a cell B1 respectively) are the same as displayed in the first row and the second row (i.e. SNs of PDUs received by the receiver from the cell A and the cell B respectively) in Fig. 1 to Fig. 3. They have the same symbols, numbers, and descriptions to have a clear comparison between the procedure 600 of the present invention and the prior art.

From Fig. 7 to Fig. 9, a time sequence of a data stream transmitted by the cell B1 is behind the cell A1. Therefore, the procedure 600 first determines that the cell B1 is the slowest cell followed by the receiver determining a packet with SN = 31 is missing from the data sequence transmitted by the slowest cell B1 at a time point 722 (should have been received at a time point 720 but was not), and the variable VR(UDR) is equal to 31. Therefore, the receiver increments the variable VR(UDR) by a number of jumped PDUs, which is 1 in this case, so that at a time point 220 the variable VR(UDR) is set to be 32. This means that the receiver considers the PDU with SN = 31 as received and delivers a PDU with SN = 32 to the upper layer for further operations.

Even though the PDU with SN = 31 was not received by the receiver, users do not sense a discontinuity in program replays as every TTI is very short (20 ms) and not replaying the PDU with SN = 31 (from a time point 730 to a time point 740) is not significant. In other words, when the receiver cannot receive the PDU with SN = 31 from the slowest cell B1 and the variable VR(UDR) equals 31, the present invention considers the PDU with SN = 31 as received, so that PDUs with SN = 32 or more are not held in a buffer unnecessarily and instead are delivered to the upper layer without delay. This maintains program replay fluency and improves program quality. In comparison, the prior art waits for the variable VR(UDR) to be out of the receiving window of the Duplicate Avoidance and Reordering Function before delivering the following stored PDUs to the upper layer and, thus, affects the program fluency.

Similarly, when the receiver cannot receive the PDU with SN = 77 from the slowest cell B1 at a time point 235 and the variable VR(UDR) is equal to 77, the receiver considers the PDU with SN = 77 as received, i.e. incrementing the variable VR(UDR) by 1 so that at a time point 240, the variable VR(UDR) is set to be 78, and at a time point 250 the PDU with SN = 78 is delivered to the upper layer for replay. Thus, the PDUs with SN = 78 and greater are not held in a buffer but are delivered to the upper layer without delay.

Additionally, from Fig. 7 to Fig. 9, between a time point of 742 and a time point of 748, the receiver cannot receive PDUs with SN = 49 to 63 from the slowest cell B1, but it is not known until a time point 750. At the time point 750, after the receiver receives a PDUs with SN = 64, the receiver then determines a situation as described above. Thus, between the time point of 742 and the time point of 748, a determining requirement of the step 606 in the procedure 600 does not stand, the step 608 is not executed and the variable VR(UDR) is updated as it is in the prior art. After the receiver replays a PDUs with SN = 48 at a time point 232, there are 7 TTIs passing by before replaying a PDUs with SN = 56 at a time point 234. This means, a time interval between replaying the PDUs with SN = 48 and replaying the PDUs with SN = 56 exactly equals to the original time interval between the two PDUs. The user senses a part of the program is discontinued, but there is no time jump as the program resumes later. The 7 TTIs between the time point 232 and the time point 234 correspond to the missing PDUs with SN = 49 to 55. After the receiver replays the PDUs with SN = 48 at the time point 232, the receiver does not replay the PDUs with SN = 56 immediately at a next TTI of the time point 232 so that the user will not be confused by discontinuity of the service content.

With the procedure 600 of the present invention, the receiver reduces jittering in data streams that deteriorates program quality. But the procedure 600 is a solution only for a mobile that can determine the "globally" slowest cell among all cells that can provide services. The global slowest cell is not easy to track when the mobile moves around. Therefore, the present invention provides another jitter reducing method for data streams that only requires a slowest cell in local area to be determined, i.e., a local slowest cell.

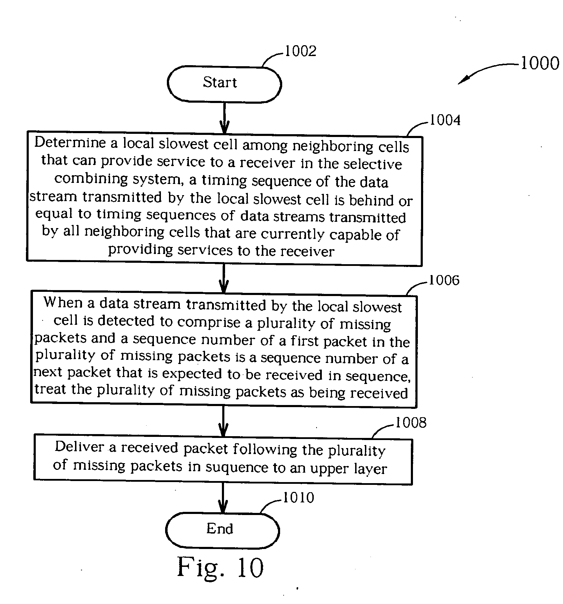

Please refer to Fig. 10. Fig. 10 is a flow chart of a procedure 1000 of a second embodiment for reducing data stream jittering in a selective combining system. The selective combining system can be a mobile communications system, such as UMTS, operating in UM. The procedure 1000 can be compiled into the duplicate avoidance and reordering program code 509. The procedure 1000 comprises following steps.
Step 1002: start.
Step 1004: determine a local slowest cell among neighboring cells that can provide service to a receiver in the selective combining system, a timing sequence of the data stream transmitted by the local slowest cell is behind or equal to timing sequences of data streams transmitted by all neighboring cells that are currently capable of providing services to the receiver.
Step 1006: when a data stream transmitted by the local slowest cell is detected to comprise a plurality of missing packets and a sequence number of a first packet in the plurality of missing packets is a sequence number of a next packet that is expected to be received in sequence, treat the plurality of missing packets as being received.
Step 1008: deliver a received packet following the plurality of missing packets in sequence to an upper layer.
Step 1010: end.

According to the procedure 1000 of the present invention, the receiver determines a local slowest cell according to timing sequences of data streams transmitted by all neighboring cells. The local slowest cell transmitting a data stream with a timing sequence that is behind or equal to timing sequences of data streams from other neighboring cells. This means that a cell having a slowest timing sequence of data streams among all neighboring cells is the local slowest cell where "the neighboring cells" is in a term indicating that the receiver can receive services from the cells currently. A set of the neighboring cells can be affected by a movement of the receiver, landscapes, land materials etc. and is not the present invention emphasis, so it will not be explained further here.

If the data stream transmitted by the local slowest cell comprises at lease one missing packet, and a first missing packet has an SN equal to an SN of a next PDU that is expected to be received (i.e. the variable VR(UDR)), the plurality of missing packets are treated as received. This means that, if the receiver cannot receive a next expected packet from the local slowest cell, the present invention considers this missing packet as received, so that the receiver can deliver packets after the missing packet in sequence to an upper layer. This enables other successfully received packets following the missing packet to be delivered to the upper layer and avoids program interruptions as in the prior arts. In real practices, the variable VR(UDR) is incremented by the number of missing packets, so that the receiver determines the missing packets as received. Consequently, the procedure 1000 avoids the receiver from holding successfully received packets in the buffer unnecessarily and hence achieves a purpose of reducing data stream jittering. It is noted that the 'local slowest cell' is a cell whose timing sequence of data streams is behind timing sequences of data streams transmitted from any neighboring cells, and it is different from the 'slowest cell' described in the procedure 600.

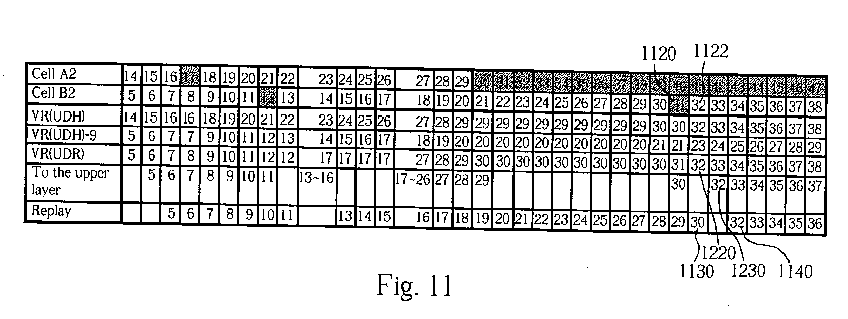

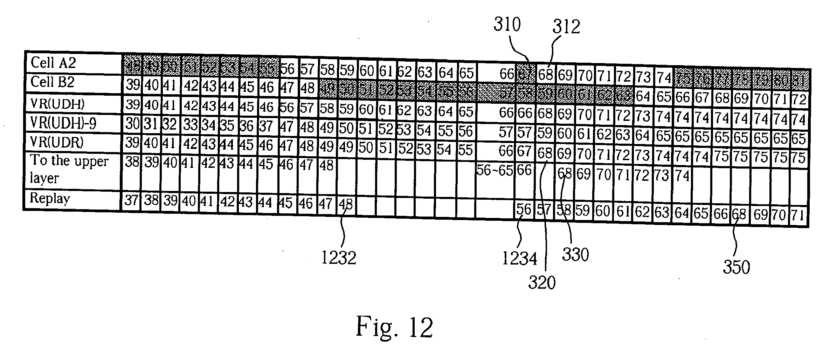

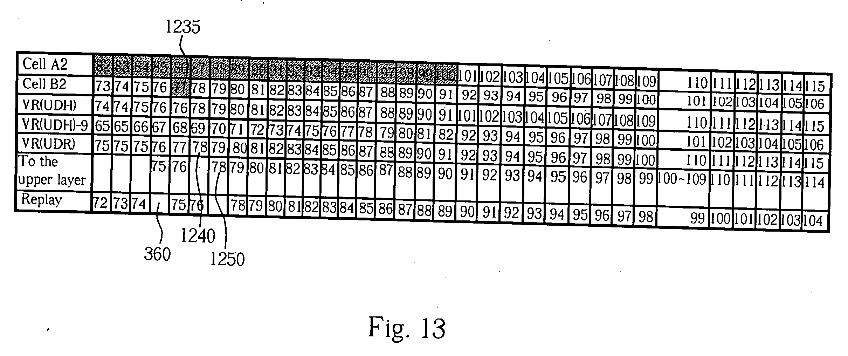

For example, please refer to Fig. 11 to Fig. 13. As displayed in Fig. 11 to Fig. 13, a first row and a second row (i.e. SNs of PDUs received by the receiver from a cell A2 and a cell B2 respectively) are the same as displayed in the first row and the second row (i.e. SNs of PDUs received by the receiver from the cell A and the cell B respectively) in Fig. 1 to Fig. 3. They have the same symbols, numbers, and descriptions to have a clear comparison between the procedure 1000 of the present invention and the prior art. According to the procedure 1000 of the present invention, the receiver first determines the local slowest cell according to timing sequences of data streams transmitted at different time points from all neighboring cells.

At a time point 1120 and a time point 1235, the cell B2 is the local slowest cell while, at time point 310, the local slowest cell is a cell A2 because the cell B2 is not a neighboring cell at this time point. The receiver determines a packet with SN = 31 is missing from the data sequence transmitted by the local slowest cell B2 at a time point 1122 (should have been received at a time point 1120 but was not), and the variable VR(UDR) is equal to 31. Therefore, the receiver increments the variable VR(UDR) by a number of jumped PDUs, which again is 1 in this case, so that at a time point 1220 the variable VR(UDR) is set to be 32. This means that the receiver considers the PDU with SN = 31 as received and can deliver a PDU with SN = 32 to the upper layer for further operations. Even though the PDU with SN = 31 was not received by the receiver, users will not sense a discontinuity in program replays as every TTI is very short (20 ms) and not replaying the PDU with SN = 31 (from a time point 1130 to a time point 1140) is not significant. In other words, when the receiver cannot receive the PDU with SN = 31 from the local slowest cell B2 and the variable VR(UDR) equals 31, the present invention considers the PDU with SN = 31 as received, so that PDUs with SN = 32 or greater are not held in the buffer unnecessarily, rather are delivered to the upper layer without delay. This maintains program replay fluency and improves program quality.

In comparison, the prior art waits for the variable VR(UDR) to be out of the receiving window of the Duplicate Avoidance and Reordering Function before delivering the following stored PDUs to the upper layer and significantly affects program fluency.

Similarly, when the receiver cannot receive the PDU with SN = 77 from the local slowest cell B2 at a time point 1235 and the variable VR(UDR) is equal to 77, the receiver considers the PDU with SN = 77 as received, i.e. incrementing the variable VR(UDR) by 1 so that at a time point 1240, the variable VR(UDR) is set to be 78, and at a time point 1250 the PDU with SN = 78 is delivered to the upper layer for replay. Thus, the PDUs with SN = 78 and greater are not held in the buffer but are delivered to the upper layer without further delay. Thus, the procedure 1000 maintains program fluency and improves program quality.

In addition, when at the time point 312, the local slowest cell is the cell A2. The receiver receives a PDU with SN = 68, so that the receiver determines a PDU with SN = 67 was not received from the local slowest cell A2 at a time point 310, and the variable VR(UDR) is 67. Therefore, the receiver considers the PDU with SN = 67 as received, i.e., the receiver increments the variable VR(UDR) by 1 so that at the time point 320, the variable VR(UDR) is set to be 68 and the PDU with SN = 68 is delivered to the upper layer at a time point 330 for replay. Note that at the time point 320, the receiver had considered the PDU with SN = 67 as received (but actually it was not received). Thus, after replaying a PDU with SN = 66 at the time point 350, the receiver jumps to replay the PDU with SN = 68 so that jittering does not have significant affects (only jumps one TTI). Other than that, at a time point 360, there is a short blank between a PDU with SN = 74 and a PDU with SN = 75. The short blank also has limited affects on program replaying.

Furthermore, as the receiver changes cells, the receiver cannot receive PDUs with SN = 49 to 55. Hence after the receiver replays a PDUs with SN = 48 at a time point 1232, there are 7 TTIs going by before replaying a PDUs with SN = 56 at a time point 1234. This means, a time interval between replaying the PDUs with SN = 48 and replaying the PDUs with SN = 56 exactly equals to a time interval originally between the two PDUs so that the user senses a part of the program is discontinued, but there are no time jumps as the program resumes later. The 7 TTIs between the time point 1232 and the time point 1234 correspond to the missing PDUs with SN = 49 to 55. After the receiver replays the PDU with SN = 48 at the time point 232, the receiver does not replay the PDU with SN = 56 immediately at a next TTI of the time point 1232 so that the user, due to the time continuity of the service content, will not be confused. However in some situations, if a time delay is long, it affects a fluency in service content replaying and causes user inconvenience. Therefore, the present invention provides another embodiment to solve the described problem.

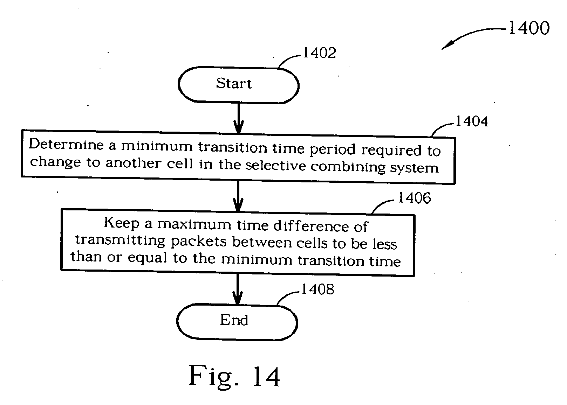

Please refer to Fig. 14. Fig. 14 is a flow chart of a procedure 1400 of a third embodiment for reducing data stream jittering in a selective combining system. The selective combining system can be a mobile communications system, such as UMTS, operating in UM. The procedure 1400 comprises following steps.
Step 1402: start.
Step 1404: determine a minimum transition time period required to change to another cell in the selective combining system.
Step 1406: keep a maximum time difference of transmitting packets between cells to be less than or equal to the minimum transition time.
Step 1408: end.

Therefore, according to the procedure 1400 of the present invention, a network transmitter determines a minimum transition time required for a receiver to change to another cell, then keeps a time difference of transmitting packets between cells to be less than or equal to the minimum transition time. For example, in Fig. 1 to Fig. 3, a minimum transition time required for changing cells is 2 TTIs, therefore the network transmitter controls a time difference between the cell A and the cell B from 9 TTIs, as shown in Fig. 1 to Fig. 3, to be within 2 TTIs. This can be achieved by keeping the timing sequence of the cell B the same and shifting the timing sequence of the cell A back 7 TTIs so that an SN of the time point 102 should be changed to 48 from 55 as shown, and there will be no large data losses in transition times later. In addition, after keeping a transmitting time difference between cells in an appropriate range, the receiving window size of the Duplicate Avoidance and Reordering Function can be set to be a value corresponds to the time difference.

In summation, for MBMS applications, the receiver is able to receive the same PDU from different cells. For better data receiving efficiency, the RLC entity of the receiver can initiate the Duplicate Avoidance and Reordering Function, which discards and reorders duplicate PDUs. However, cells are not in synchronization so that there is a time difference between cells transmission even if service contents are identical. In the present invention, if the receiver cannot receive a next expected packet from a slowest cell, the present invention considers this missing packet as received so that the receiver can deliver packets after the missing packet in sequence to upper layer for replay. This avoids the prior art problem of having other successfully received packets that are after the missing packet in sequence being held in a buffer and not sent to the upper layer, which leads to delay in data stream processing or replaying. The present invention maintains program replay fluency and improves program quality. Additionally, the present invention keeps a time difference of transmitting between cells to be less than or equal to a minimum transition time required to change cells, to avoid data losses when the receiver moves and changes cells. Therefore, the present invention can reduce jittering in data streams in a selective combining system and have a better program quality with more fluent service contents replaying. Those skilled in the art will readily observe that numerous modifications and alterations of the device and method may be made while retaining the teachings of the invention. Accordingly, the above disclosure should be construed as limited only by the metes and bounds of the appended claims.

## Claims

1. A jitter reducing method in a receiver of a selective combining system, the method comprising:
determining a slowest cell corresponding to the receiver in the selective combining system;
treating a plurality of missing packets as being received, when a data stream transmitted by the slowest cell is detected to comprise the plurality of missing packets and a sequence number of a first packet in the plurality of missing packets is a sequence number of a next packet that is expected to be received in sequence; and
delivering a received packet following the plurality of missing packets in sequence to an upper layer.

2. The method of claim 1 wherein treating the plurality of missing packets as being received is incrementing the sequence number of the next packet that is expected to be received in sequence by a number of the plurality of missing packets.

3. The method of claim 2 wherein the number of the plurality of missing packets is 1.

4. The method of claim 1 wherein a timing sequence of the data stream transmitted by the slowest cell is behind or equal to timing sequences of data streams transmitted by all other cells that are capable of providing services to the receiver.

5. The method of claim 1 wherein a timing sequence of the data stream transmitted by the slowest cell is behind or equal to timing sequences of data streams transmitted by all neighboring cells that are currently capable of providing services to the receiver.

6. The method of claim 1 wherein the receiver is operating in Unacknowledged Mode (UM).

7. A receiving device comprising a central processing unit in electrical communications with a memory, the memory comprising program code for implementing the method of claim 1.

8. A jitter reducing method in a selective combining system, the method comprising:
determining a minimum transition time period required to change to another cell in the selective combining system; and
keeping a maximum time difference of transmitting packets between cells to be less than or equal to the minimum transition time.

9. The method of claim 8 further comprising setting a size of a duplicate avoidance and reordering function window according to the minimum transition time.

10. The method of claim 9 wherein the selective combining system is operating in Unacknowledged Mode (UM).
